# EUROPÄISCHE PATENTSCHRIFT

(11) **EP 2 376 814 B1**
(45) Veröffentlichungstag und Bekanntmachung des Hinweises auf die Patenterteilung: **24.12.2014**
(21) Anmeldenummer: 10700250.3
(22) Anmeldetag: 13.01.2010
(51) Int. Cl.: F16H 61/04

(54) **VERFAHREN ZUM BETREIBEN EINER GETRIEBEVORRICHTUNG**
METHOD FOR THE OPERATION OF A TRANSMISSION DEVICE
PROCÉDÉ POUR FAIRE FONCTIONNER UN SYSTÈME DE TRANSMISSION

(30) Priorität: 15.01.2009 DE 102009000253
(43) Veröffentlichungstag der Anmeldung: 19.10.2011
(73) Patentinhaber: ZF Friedrichshafen AG, 88038 Friedrichshafen (DE)
(72) Erfinder: ARNOLD, Jörg, 88090 Immenstaad (DE); STEINHAUSER, Klaus, 88079 Kressbronn (DE); HERBETH, Valentine, 88045 Friedrichshafen (DE); POPP, Christian, 88079 Kressbronn (DE); SCHMIDT, Thilo, 88074 Meckenbeuren (DE); ZIEMER, Peter, 88069 Tettnang (DE); DIOSI, Gabor, 88045 Friedrichshafen (DE); MARGRAF, Christoph, 88682 Salem (DE)
(86) Internationale Anmeldenummer: PCT/EP2010/050341
(87) Internationale Veröffentlichungsnummer: WO 2010/081819

(56) Entgegenhaltungen:
- EP-A1- 1 705 406
- EP-A1- 1 995 499
- DE-A1- 19 814 569
- DE-A1-102004 014 081

## Beschreibung

Die Erfindung betrifft ein Verfahren zum Betreiben einer Getriebevorrichtung gemäß der im Oberbegriff des Patentanspruches 1 näher definierten Art, wie aus der DE 198 14 569 A1 bekannt.

Aus der Praxis bekannte und als Automatgetriebe ausgeführte Getriebevorrichtungen sind zum Darstellen verschiedener Übersetzungen mit Schaltelementen ausgeführt, über welche jeweils ein anliegendes Drehmoment reibschlüssig übertragbar ist. Bei Vorliegen einer Anforderung zum Darstellen einer definierten Übersetzung werden jeweils wenigstens eines oder mehrere der reibschlüssigen Schaltelemente aus dem Kraftfluss einer Getriebevorrichtung abgeschaltet, während wenigstens ein weiteres oder weitere reibschlüssige Schaltelemente zur Darstellung der angeforderten Übersetzung in den Kraftfluss der Getriebevorrichtung zugeschaltet werden. Während des Zuschaltvorganges eines reibschlüssigen Schaltelementes sind zur Gewährleistung eines gewünschten Schaltkomforts sowie einer zugkraftunterbrechungsfreien Schaltung keine besonderen Synchronisiermaßnahmen erforderlich, da ein angestrebter Schaltkomfort und auch eine zugkräftunterbrechungsfreie Schaltung mittels reibschlüssigen Schaltelementen bei definierten Anpressdrücken innerhalb eines breiten Differenzdrehzahlbandes realisierbar sind.

Da derartige Getriebevorrichtungen in an sich bekannter Art und Weise auf Grund von im Bereich von geöffneten reibschlüssigen Schaltelementen auftretenden Schleppverlusten mit nur unzureichenden Wirkungsgraden betreibbar sind, werden bestimmte reibschlüssige Schaltelemente durch formschlüssige Schaltelemente ersetzt. Bei solchen Automatgetrieben, die sowohl mit reibschlüssigen Schaltelementen als auch mit mindestens einem formschlüssigen Schaltelement und mit einer entsprechenden Radsatzkonstfuktion ausgeführt sind, ist zur Umsetzung einer definierten Schaltanforderung mindestens ein formschlüssiges Schaltelement in einen Kraftfluss einer Getriebevorrichtung zuzuschalten.

Nachteilhafterweise sind formschlüssige Schaltelemente mit oder ohne zusätzliche konstruktive Synchronisiereinrichtungen im Vergleich zu reibschlüssigen Schaltelementen nur bei sehr geringen Differenzdrehzahlen, d. h. nahe ihrer Synchrondrehzahl, komfortabel schaltbar, wodurch ein Betrieb eines mit wenigstens einem formschlüssigen Schaltelement ausgeführten und als Automatgetriebe ausgebildeten Getriebevorrichtung zumindest während der Durchführung bestimmter Schaltungen, an welchen ein formschlüssiges Schaltelement beteiligt ist, in unerwünschtem Umfang beeinträchtigt ist. Eine angeforderte Schaltung ist unter Umständen erst nach Ablauf einer unerwünscht langen Schaltzeit abschließbar, da vor dem Schließen des an der angeforderten Schaltung beteiligten formschlüssigen Schaltelementes sich die Differenzdrehzahl im Bereich des formschlüssigen Schaltelementes auf einen Betrag einstellen muss, zu dem das formschlüssige Schaltelement in seinen geschlossenen Betriebszustand überführbar ist. Des Weiteren ist im Bereich eines zuzuschaltenden formschlüssigen Schaltelementes vor dem Erreichen des geschlossenen Betriebszustandes keine Lastübernahme wie bei einem reibschlüssigen Schaltelement möglich, womit Schaltungen mit formschlüssigen Schaltelementen nicht zugkraftunterbrechungsfrei durchführbar sind.

Zusätzliche konstruktive Maßnahmen zum Synchronisieren von formschlüssigen Schaltelementen von Getriebevorrichtungen, um eine angeforderte Schaltung zugkraftunterbrechungsfrei innerhalb einer akzeptablen Schaltzeit bei gleichzeitig hohem Schaltkomfort durchführen zu können, erhöhen jedoch unerwünschterweise sowohl die Fertigungskosten als auch den Bauraumbedarf der Getriebevorrichtungen.

Der vorliegenden Erfindung liegt daher die Aufgabe zu Grunde, ein Verfahren zum Betreiben einer Getriebevorrichtung zur Verfügung zu stellen, mittels welchem Schaltungen in Getriebevorrichtungen, an welchen wenigstens ein formschlüssiges Schaltelement beteiligt ist, mit hohem Schaltkomfort kostengünstig und ohne zusätzlichen Bauraumbedarf einer Getriebevorrichtung innerhalb vordefinierter Schaltzeiten und vorzugsweise ohne Zugkraftunterbrechung durchführbar sind.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung mit mehreren reibschlüssigen Schaltelementen und wenigstens einem formschlüssigen Schaltelement zum Darstellen verschiedener Übersetzungen wird das formschlüssige Schaltelement bei einer angeforderten Schaltung, während der das formschlüssige Schaltelement aus einem geöffneten in einen geschlossenen Betriebszustand überführt wird, durch Anheben der Übertragungsfähigkeit wenigstens eines reibschlüssigen Schaltelementes, welches weder zur Darstellung des aktuellen Betriebszustands der Getriebevorrichtung noch zur Darstellung der einzulegenden Übersetzung in den Kraftfluss der Getriebevorrichtung zuzuschalten ist, wenigstens annähernd synchronisiert.

Damit wird das wenigstens eine formschlüssige Schaltelement ohne zusätzliche konstruktive Synchronisierungseinrichtungen durch einen entsprechenden Betrieb von in einer Getriebevorrichtung bereits vorhandenen Einrichtungen, d. h. vorliegend mittels wenigstens einem reibschlüssigen Schaltelement, effektiv, kostengünstig und mit geringem Bauraumbedarf der Getriebevorrichtung während einer angeforderten Schaltung vor dem Schließvorgang synchronisiert, so dass Schaltungen mit hohem Schaltkomfort mit gleichzeitig akzeptablen Schaltzeiten sowie vorzugsweise zugkraftunterbrechungsfrei durchführbar sind.

Bei dem Verfahren nach der Erfindung wird das formschlüssige Schaltelement in wenigstens annähernd synchronisiertem Betriebszustand in seinen geschlossenen Betriebszustand überführt, womit ein hoher Schaltkomfort bei gleichzeitig geringen mechanischen Belastungen im Bereich des formschlüssigen Schaltelementes erreicht wird.

Die Belastungen für die einzelnen Baugruppen einer Getriebevorrichtung sind bei einer weiteren vorteilhaften Variante des erfindungsgemäßen Verfahrens bei gleichzeitig hohem Schaltkomfort dadurch reduziert, dass die Übertragungsfähigkeit wenigstens eines weiteren reibschlüssigen Schaltelementes, welches weder an dem Synchronisiervorgang des formschlüssigen Schaltelementes noch zur Darstellung des aktuellen Betriebszustands der Getriebevorrichtung oder zur Darstellung der einzulegenden Übersetzung beteiligt ist, vor dem durch das Anheben der Übertragungsfähigkeit des reibschlüssigen Schaltelementes bewirkten Synchronisieren des formschlüssigen Schaltelementes angehoben und ein mit einem Getriebeausgang wirkverbundener Abtrieb eines mit der Getriebevorrichtung ausgebildeten Fahrzeuges abgebremst wird.

Bei einer Rückwärtsfahrt eines mit der Getriebevorrichtung ausgeführten Fahrzeuges mit einer Fahrzeuggeschwindigkeit größer als ein vordefinierter Schwellwert, einem Neutralbetriebszustand der Getriebevorrichtung, zu dem der Kraftfluss in der Getriebevorrichtung im Wesentlichen unterbrochen ist, und bei Vorliegen einer Anforderung zum Einlegen einer Übersetzung für Vorwärtsfahrt in der Getriebevorrichtung, zu deren Darstellung das formschlüssige Schaltelement in einen geschlossenen Betriebszustand zu überführen ist, wird der mit dem Abtrieb wirkverbundene Getriebeausgang durch Anheben der Übertragungsfähigkeit des weiteren reibschlüssigen Schaltelementes bei einer weiteren vorteilhaften Variante des Verfahrens nach der Erfindung abgebremst, um die angeforderte Schaltung mit hohem Schaltkomfort bei gleichzeitig geringen mechanischen Belastungen im Bereich des formschlüssigen Schaltelementes durchführen zu können.

Eine angeforderte Schaltung, während der ein formschlüssiges Schaltelement in den Kraftfluss einer Getriebevorrichtung zuzuschalten ist, wird mittels einer weiteren Variante des Verfahrens nach der Erfindung mit hohem Schaltkomfort bei gleichzeitig geringen mechanischen Belastungen im Bereich des formschlüssigen Schaltelementes durchgeführt, da bei einer Vorwärtsfahrt eines mit der Getriebevorrichtung ausgeführten Fahrzeuges und bei einer Fahrzeuggeschwindigkeit kleiner als ein vordefinierter Schwellwert, einem Neutralbetriebszustand der Getriebevorrichtung, zu dem der Kraftfluss in der Getriebevorrichtung im Wesentlichen unterbrochen ist und bei Vorliegen einer Anforderung zum Einlegen einer Übersetzung für Vorwärtsfahrt in der Getriebevorrichtung, zu deren Darstellung das formschlüssige Schaltelement in einen geschlossenen Betriebszustand zu überführen ist, das formschlüssige Schaltelement durch Anheben der Übertragungsfähigkeit eines reibschlüssigen Schaltelementes, dessen Übertragungsfähigkeit während der Darstellung der angeforderten Übersetzung im Wesentlichen Null ist, wenigstens annähernd synchronisiert und anschließend geschlossen wird, wobei daran anschließend ein den Kraftfluss in der Getriebevorrichtung herstellendes reibschlüssiges Schaltelement zugeschaltet wird.

Bei einer Rückwärtsfahrt mit einer Fahrzeuggeschwindigkeit kleiner als der Schwellwert wird das formschlüssige Schaltelement durch Anheben der Übertragungsfähigkeit des reibschlüssigen Schaltelementes wenigstens annähernd synchronisiert und anschließend geschlossen und wiederum daran anschließend ein den Kraftfluss in der Getriebevorrichtung herstellendes reibschlüssiges Schaltelement bei einer weiteren vorteilhaften Variante des Verfahrens nach der Erfindung zugeschaltet, um die angeforderte Schaltung mit hohem Komfort bei gleichzeitig geringen mechanischen Belastungen im Bereich des formschlüssigen Schaltelementes durchführen zu können.

Bei Vorliegen einer Anforderung für eine vorzugsweise zugkraftunterbrechungsfreie Zughochschaltung, während welcher das formschlüssige Schaltelement zur Darstellung der angeforderten Ziel-Übersetzung zuzuschalten ist, wird das formschlüssige Schaltelement bei einer weiteren vorteilhaften Variante des erfindungsgemäßen Verfahrens vor der Zuschaltung durch Anheben der Übertragungsfähigkeit wenigstens eines reibschlüssigen Schaltelementes, welches weder zur Darstellung des aktuellen Betriebszustandes in der Getriebevorrichtung noch zur Darstellung des angeforderten Betriebszustandes in den Kraftfluss der Getriebevorrichtung zuzuschalten ist, wenigstens annähernd synchronisiert.

Die Übertragungsfähigkeit des zur Darstellung der Ist-Übersetzung vorgesehenen zugeschalteten reibschlüssigen Schaltelementes wird bei Vorliegen einer Getriebeeingangsdrehzahl, die wenigstens annähernd einer zu der angeforderten Ziel-Übersetzung äquivalenten Synchrondrehzahl entspricht, bei einer weiteren vorteilhaften Variante des erfindungsgemäßen Verfahrens abgesenkt, während das zuzuschaltende formschlüssige Schaltelement in seinen geschlossenen Betriebszustand überführt wird.

Bei einer weiteren vorteilhaften Variante des erfindungsgemäßen Verfahrens ist eine angeforderte Zughochschaltung dadurch zugkraftunterbrechungsfrei durchführbar, dass die Übertragungsfähigkeit eines zur Darstellung der Ist-Übersetzung in den Kraftfluss zugeschalteten reibschlüssigen Schaltelementes bei Vorliegen der Anforderung für die Zughochschaltung ausgehend von der Ist-Übersetzung in Richtung der Ziel-Übersetzung reduziert wird und das zum Synchronisieren des zuzuschaltenden formschlüssigen Schaltelements vorgesehene reibschlüssige Schaltelement für die Erhöhung der Übertragungsfähigkeit wenigstens annähernd vorbereitet ist.

Die Übertragungsfähigkeit des zur Darstellung der Ist-Übersetzung zugeschalteten reibschlüssigen Schaltelementes wird bei einer weiteren vorteilhaften Variante des erfindungsgemäßen Verfahrens wenigstens annähernd auf Null abgesenkt, wenn die Getriebeeingangsdrehzahl aufgrund der Übertragungsfähigkeit des zum Synchronisieren zuzuschaltenden formschlüssigen Schaltelementes vorgesehenen reibschlüssigen Schaltelementes von der zur Ist-Übersetzung äquivalenten Drehzahl in Richtung der zur Ziel-Übersetzung äquivalenten Drehzahl geführt wird. Damit wird auf einfache Art und Weise gewährleistet, dass eine angeforderte Zughochschaltung zugkraftunterbrechungsfrei bei gelichzeitig hohem Schaltkomfort durchführbar ist.

Sowohl die in den Patentansprüchen angegebenen Merkmale als auch die in den nachfolgenden Ausführungsbeispielen des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Gegenstandes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: ein Räderschema einer Getriebevörrichtung;
- Fig. 2: ein Schaltschema der Getriebevorrichtung gemäß Fig. 1 in tabellarischer Form;
- Fig. 3: mehrere Verläufe verschiedener Betriebszustandsparameter der Getriebevorrichtung gemäß Fig. 1 während der Durchführung einer angeforderten Schaltung;
- Fig. 4: eine Fig. 3 entsprechende Darstellung verschiedener Verläufe von Betriebszustandsparametern während eines eine weitere Schaltung umfassenden Betriebszustandsverlaufes der Getriebevorrichtung gemäß Fig. 1; und
- Fig. 5: eine Fig. 3 entsprechende Darstellung verschiedener Verläufe von Betriebszustandsparametern während eines eine weitere Schaltung umfassenden Betriebszustandsverlaufes einer gegenüber der Getriebevorrichtung gemäß Fig. 1 geänderten zweiten Ausführungsform der Getriebevorrichtung.

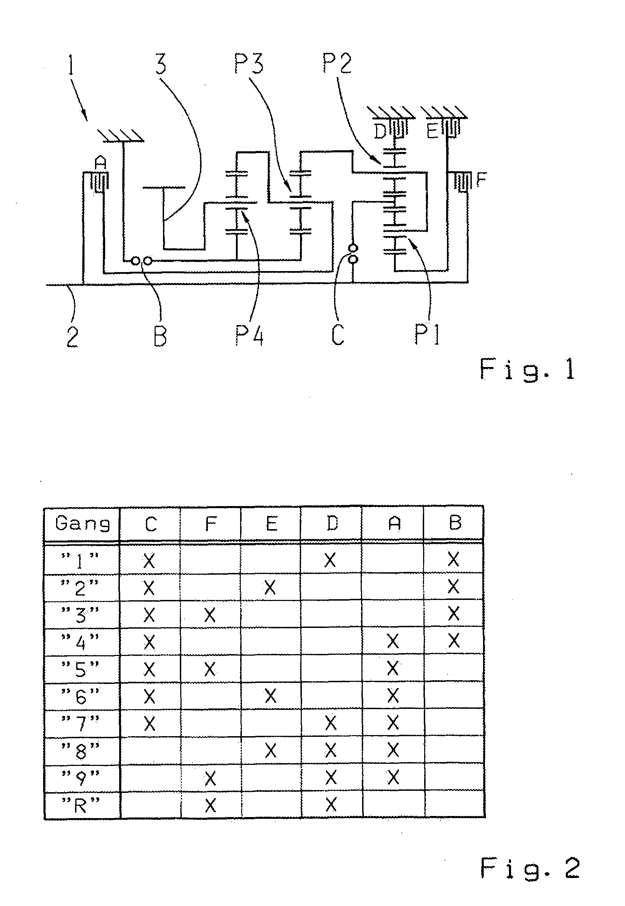

Fig. 1 zeigt ein Räderschema einer Getriebevorrichtung 1 bzw. eines Mehrstufengetriebes, welches grundsätzlich aus der unveröffentlichten deutschen Patentanmeldung DE 10 2008 000 429.4 der Anmelderin bekannt ist. Die Getriebevorrichtung umfasst eine Antriebswelle 2 und eine Abtriebswelle 3, welche in in einem Fahrzeug montierten Zustand mit einem Abtrieb des Fahrzeuges verbunden ist, während die Antriebswelle 2 mit einer Antriebsmaschine wirkverbunden ist.

Darüber hinaus umfasst die Getriebevorrichtung 1 vier Planetenradsätze P1 bis P4, wobei der erste und der zweite Planetenradsatz P1, P2, die vorzugsweise als Minus-Planetensätze ausgebildet sind, einen schaltbaren Vorschaltradsatz bilden, während der dritte und der vierte Planetenradsatz P3, P4 den Hauptradsatz darstellen. Zusätzlich umfasst die Getriebevorrichtung 1 sechs Schaltelemente A bis F, wovon die Schaltelemente B, D und E als Bremsen und die Schaltelemente A, C und F als Schaltkupplungen ausgeführt sind.

Mit den Schaltelementen A bis F ist ein selektives Schalten von neun Vorwärtsgängen "1" bis "9" und einem Rückwärtsgang "R" realisierbar, wobei bis auf die vierte Übersetzungsstufe "4" zur Darstellung einer Übersetzung in der Getriebevorrichtung 1 bzw. zum Herstellen eines Kraftflusses in der Getriebevorrichtung 1 jeweils gleichzeitig drei Schaltelemente in einen geschlossenen Betriebszustand zu führen bzw. zu halten sind.

Die Schaltelemente B und C sind vorliegend als formschlüssige Schaltelemente ausgebildet, um im Betrieb der Getriebevorrichtung 1 im Vergleich zu Getriebevorrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes um die Synchrondrehzahl aus einem geöffneten Betriebszustand in einen geschlossenen Betriebszustand überführbar sind, wird die Synchronisierung eines zuzuschaltenden formschlüssigen Schaltelementes ohne zusätzliche konstruktive Ausführungen mittels des nachfolgend näher beschriebenen erfindungsgemäßen Verfahrens unterstützt bzw. durch die erfindungsgemäße Vorgehensweise vollständig realisiert. Dabei ist das nachbeschriebene Verfahren sowohl für Zug- als auch für Schubschaltungen geeignet, wobei die formschlüssigen Schaltelemente als Klauenkupplungen ausgeführt sein können, welche mit oder ohne zusätzliche Synchronisierung ausgebildet sind.

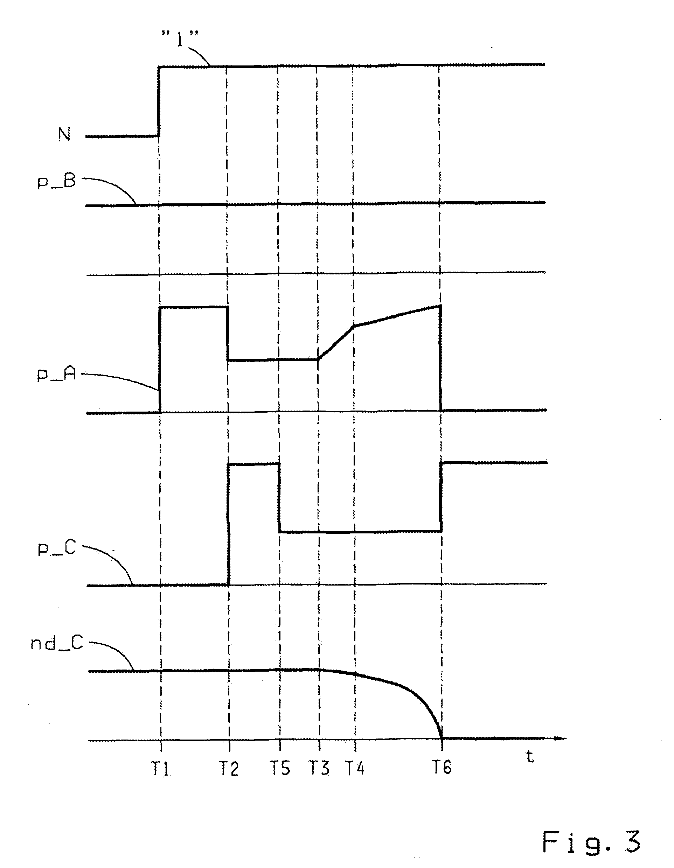

Die Wirkungsweise einer ersten Variante des erfindungsgemäßen Verfahrens wird anhand der in Fig. 3 über der Zeit t näher dargestellten Betriebszustandsverläufe mehrerer Betriebsparameter der Getriebevorrichtung 1 gemäß Fig. 1 näher erläutert.

Bis zu einem Zeitpunkt T1 befindet sich die Getriebevorrichtung 1 in einem so genannten Neutralbetriebszustand N, zu dem über die Getriebevorrichtung 1 im Wesentlichen kein Drehmoment von der Antriebswelle 2 in Richtung der Abtriebswelle 3 oder in umgekehrter Richtung führbar ist. Zum Zeitpunkt T1 ergeht eine Schaltanforderung zum Einlegen der ersten Übersetzungsstufe "1" für Vorwärtsfahrt, zu deren Darstellung das Schaltelement C, das Schaltelement D und das Schaltelement B in einen geschlossenen Betriebszustand zu überführen sind.

Zur Erhöhung einer Spontaneität wird das Schaltelement B im Neutralbetriebszustand N der Getriebevorrichtung 1 auch ohne entsprechende Schaltanforderung bereits in seinen geschlossenen Betriebszustand überführt und durch den Betätigungsdruck p_B gehalten. Das Schaltelement B ist auch zur Darstellung der Übersetzung "R" für Rückwärtsfahrt beteiligt, womit bei Vorliegen einer entsprechenden Schaltanforderung ausgehend von dem Neutralbetriebszustand N eine Schaltung in die Anfahrübersetzung bzw. die erste Übersetzung für Vorwärtsfahrt "1" oder in die Übersetzung "R" für Rückwärtsfahrt jeweils mit kurzer Schaltzeit durchführbar ist. Dies resultiert aus der Tatsache, dass dann jeweils nur die Schaltelemente C und D oder die Schaltelemente D und F zu schließen sind.

Zur Umsetzung der Schaltanforderung vom Neutralbetriebszustand N in die erste Übersetzungsstufe "1" für Vorwärtsfahrt wird zunächst das weitere formschlüssige Schaltelement C geschlossen, welches bei gleichzeitig geschlossenem Schaltelement B und wiederum gleichzeitig in geöffnetem Betriebszustand vorliegendem weiteren reibschlüssigen Schaltelement D in geschlossenem Betriebszustand noch nicht den Kraftschluss in der Getriebevorrichtung 1 herstellt. Daran anschließend wird das reibschlüssige Schaltelement D zugeschaltet bzw. in seinen geschlossenen Betriebszustand überführt. Der Schaltvorgang ausgehend vom Neutralbetriebszustand N in Richtung der ersten Übersetzungsstufe "1" ist dann beendet.

Zur Synchronisierung des formschlüssigen Schaltelementes C vor dem eigentlichen Schließvorgang wird der Betätigungsdruck p_A des reibschlüssigen Schaltelementes A während eines bis zu einem zweiten Zeitpunkt T2 andauernden Druckpulses mit Betätigungsdruck p_A beaufschlagt und anschließend auf einem niedrigen Druckniveau p_A1 bis zu einem weiteren Zeitpunkt T3 weiter mit Druck versorgt, womit sich ein Kolben des reibschlüssigen Schaltelementes A an ein nicht näher dargestelltes Lamellenpaket des Schaltelementes A anlegt. Zum Zeitpunkt T3 wird der Betätigungsdruck p_A des Schaltelementes A entlang einer Druckrampe, die zu einem Zeitpunkt T4 endet, angehoben, womit die Übertragungsfähigkeit des Schaltelementes A ansteigt und eine Differenzdrehzahl nd_C im Bereich des zu schließenden formschlüssigen Schaltelementes C in der in Fig. 2 dargestellten Art und Weise langsam abgebaut wird. Das bedeutet, dass das Schaltelement C durch das Anheben der Übertragungsfähigkeit des Schaltelementes A in Richtung seines Synchronpunktes geführt wird.

Gleichzeitig wird das Schaltelement C ab dem Zeitpunkt T2 während einer bis zu einem Zeitpunkt T5 andauernden Schnellfüllphase und einer sich daran bis zu einem Zeitpunkt T6 zeitlich erstreckenden Füllausgleichsphase für die Zuschaltung in den Kraftfluss der Getriebevorrichtung 1 vorbereitet. Das Schaltelement C liegt zum Zeitpunkt T6 in wenigstens annähernd synchronem Betriebszustand vor, zu dem ein weiteres Anheben des Betätigungsdruckes p_C ein Schließen des Schaltelementes C zur Folge hat.

Zwischen dem Zeitpunkt T4 und dem Zeitpunkt T6 wird der Betätigungsdruck p_A des Schaltelementes A über eine flachere Druckrampe als zwischen den Zeitpunkten T3 und T4 weiter angehoben, um die Differenzdrehzahl nd_C des Schaltelementes C möglichst gegen Null zu führen und das formschlüssige Schaltelement C harmonisch zu synchronisieren. Da die Differenzdrehzahl nd_C des Schaltelementes C zum Zeitpunkt T6 wenigstens annähernd gleich Null ist, wird der Betätigungsdruck p_C des Schaltelementes C zum Zeitpunkt T6 sprungförmig angehoben und das Schaltelement C schlagartig geschlossen, während der Betätigungsdruck p_A des Schaltelementes A, welches an der Darstellung der ersten Übersetzungsstufe "1" für Vorwärtsfahrt der Getriebevorrichtung 1 nicht beteiligt ist, sprungförmig wenigstens annähernd auf den Wert Null abgesenkt wird. Dadurch geht das Schaltelement A wiederum in seinen geöffneten Betriebszustand über, zu dem über das Schaltelement A im Wesentlichen kein Drehmoment führbar ist. Das bedeutet, dass der Zuschaltvorgang des formschlüssigen Schaltelementes C zum Zeitpunkt T6 beendet ist und das den Kraftschluss in der Getriebevorrichtung 1 herstellende weitere reibschlüssige Schaltelement D durch entsprechendes Anheben des Betätigungsdruckes des reibschlüssigen Schaltelementes D in den Kraftfluss der Getriebevorrichtung 1 zuschaltbar ist.

Dabei besteht in Abhängigkeit des jeweils vorliegenden Anwendungsfalles die Möglichkeit, das Schaltelement D bereits vor dem Zuschaltzeitpunkt T6 des formschlüssigen Schaltelementes C für seine Zuschaltung durch entsprechende Druckführung seines Betätigungsdruckes vorzubereiten.

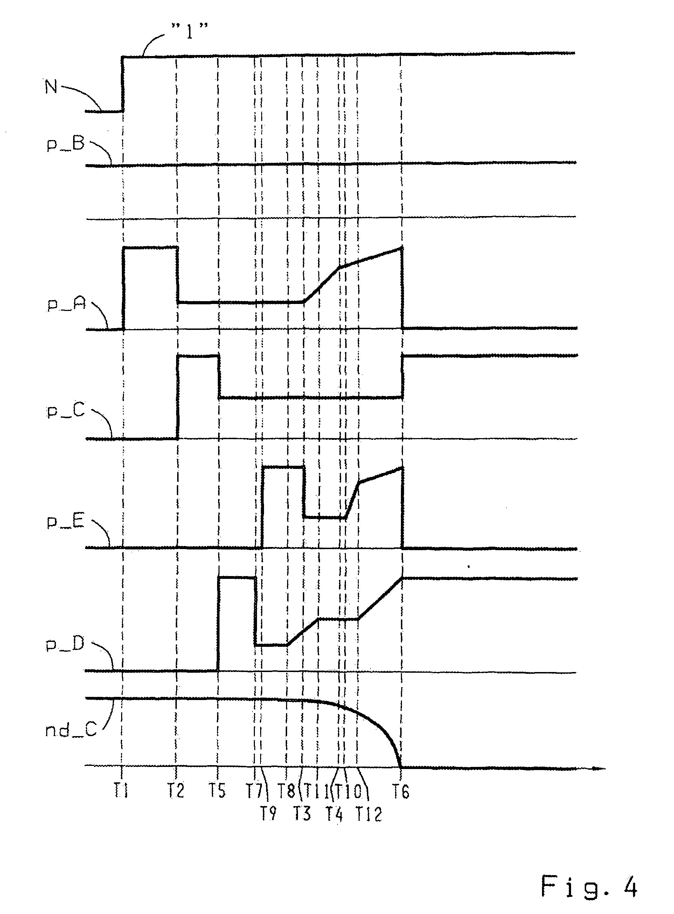

Die in Fig. 4 dargestellten Betriebszustandsverläufe der Getriebevorrichtung 1 stellen sich bei der Anwendung einer weiteren Variante des erfindungsgemäßen Verfahrens ein, welche im Vergleich zu der vorbeschriebenen Vorgehensweise eine weitere Funktionalität aufweist.

Die Verläufe der Betriebsparameter der Getriebevorrichtung 1 stellen sich während einer Schaltung und ausgehend von einem Betriebspunkt ein, zu dem sich die Getriebevorrichtung 1 im Neutralbetriebszustand befindet und ein mit der Getriebevorrichtung 1 ausgeführtes Fahrzeug in Rückwärtsfahrtrichtung rollt. Zum Zeitpunkt T1 ergeht wiederum eine Schaltanforderung zum Einlegen der ersten Übersetzungsstufe "1" für Vorwärtsfahrt in der Getriebevorrichtung 1. Da das Fahrzeug in Rückwärtsfahrtrichtung rollt, wird das Fahrzeug bei der zweiten Variante des Verfahrens nach der Erfindung vor dem eigentlichen Synchronisierungsvorgang des formschlüssigen Schaltelementes C durch das reibschlüssige Schaltelement A in der nachfolgend näher beschriebenen Art und Weise durch ein definiertes Abbremsen der Abtriebswelle 3 abgebremst.

Hierfür wird das reibschlüssige Schaltelement A in der vorbeschriebenen Art und Weise zwischen den Zeitpunkten T1 und T3 für das Anheben der Übertragungsfähigkeit des Schaltelementes A vorbereitet. Gleichzeitig wird der Betätigungsdruck p_C des Schaltelementes C in der zu Fig. 3 beschriebenen Art und Weise zwischen den Zeitpunkten T2 und T6 eingestellt und für das Zuschalten in den Kraftfluss der Getriebevorrichtung 1 vorbereitet. Ab dem Zeitpunkt T5 wird der Betätigungsdruck p_D der reibschlüssigen Bremse bzw. des Schaltelementes D bis zu einem Zeitpunkt T7 mittels eines Schnellfüllpulses vorbefüllt und während einer Füllausgleichsphase, die zu einem Zeitpunkt T8 endet, für das Anheben der Übertragungsfähigkeit des Schaltelementes D vorbereitet.

Zu einem zeitlich kurz auf den Zeitpunkt T7 folgenden Zeitpunkt T9 wird der Betätigungsdruck p_E des Schaltelementes E ebenfalls mittels eines vorliegend zum Zeitpunkt T3 endenden Schnellfüllpulses vorbefüllt und während einer sich daran anschließenden und zu einem Zeitpunkt T10 endenden Füllausgleichsphase für das Anheben der Übertragungsfähigkeit des Schaltelementes E vorbereitet.

Das zur Erhöhung der Spontaneität der sich im Neutralbetriebszustand befindenden Getriebevorrichtung 1 in geschlossenem Betriebszustand vorliegende Schaltelement B wird während des gesamten Betriebszustandsverlaufes mit einem Wert des Ansteuerdruckes p_B betätigt, zu dem das formschlüssige Schaltelement B in vollständig geschlossenem Zustand gehalten wird.

Zum Zeitpunkt T8 wird der Betätigungsdruck p_D des Schaltelementes D über eine erste Druckrampe, weiche zum Zeitpunkt T11 endet, angehoben und bis zu einem weiteren Zeitpunkt T12 auf dem Druckniveau zum Zeitpunkt T11 belassen. Gleichzeitig wird der Betätigungsdruck p_E des Schaltelementes E zum Zeitpunkt T10 über eine erste Druckrampe. welche ebenfalls zum Zeitpunkt T12 endet, angehoben, womit sowohl über das Schaltelement D als auch über das Schaltelement E Drehmoment führbar ist. Das Anheben der Übertragungsfähigkeit des Schaltelementes D und auch der Übertragungsfähigkeit des Schaltelementes E führt zu einer Überbestimmung des Getrieberadsatzes der Getriebevorrichtung 1 und somit zu einem definierten Abbremsen der Abtriebswelle 3 sowie des Fahrzeuges.

Ab dem Zeitpunkt T12 werden sowohl der Betätigungsdruck p_D des Schaltelementes D als auch der Betätigungsdruck p_E des Schaltelementes E jeweils über eine zweite Druckrampe bis zum Zeitpunkt T6 angehoben und das Fahrzeug weiter abgebremst.

Zusätzlich führt das Anheben des Betätigungsdruckes p_A des Schaltelementes A zwischen den Zeitpunkten T3 und T6 in der vorbeschriebenen Art und Weise zur Absenkung der Differenzdrehzahl nd_C des Schaltelementes C, wobei zum Zeitpunkt T6 die Differenzdrehzahl nd_C des Schaltelementes C wenigstens annähernd Null ist. Zum Zeitpunkt T6 wird das Schaltelement C durch Anheben des Betätigungsdruckes p_C geschlossen, während das reibschlüssige Schaltelement A durch sprungförmiges Absenken des Betätigungsdruckes p_A in seinen geöffneten Betriebszustand überführt wird. Gleichzeitig wird auch das Schaltelement E, welches ebenfalls nicht an der Darstellung der ersten Übersetzungsstufe "1" beteiligt ist, durch sprungförmiges Absenken des Betätigungsdruckes p_E in seinen geöffneten Betriebszustand überführt.

Der Betätigungsdruck p_D des an der Darstellung der ersten Übersetzungsstufe "1" beteiligten Schaltelementes D wird auf dem Druckniveau, welches der Betätigungsdruck p_D zum Zeitpunkt T6 aufweist und das im Wesentlichen dem Schließdruck des Schaltelementes p_D entspricht, belassen, womit die angeforderte Schaltung zum Zeitpunkt T6 als beendet anzusehen ist.

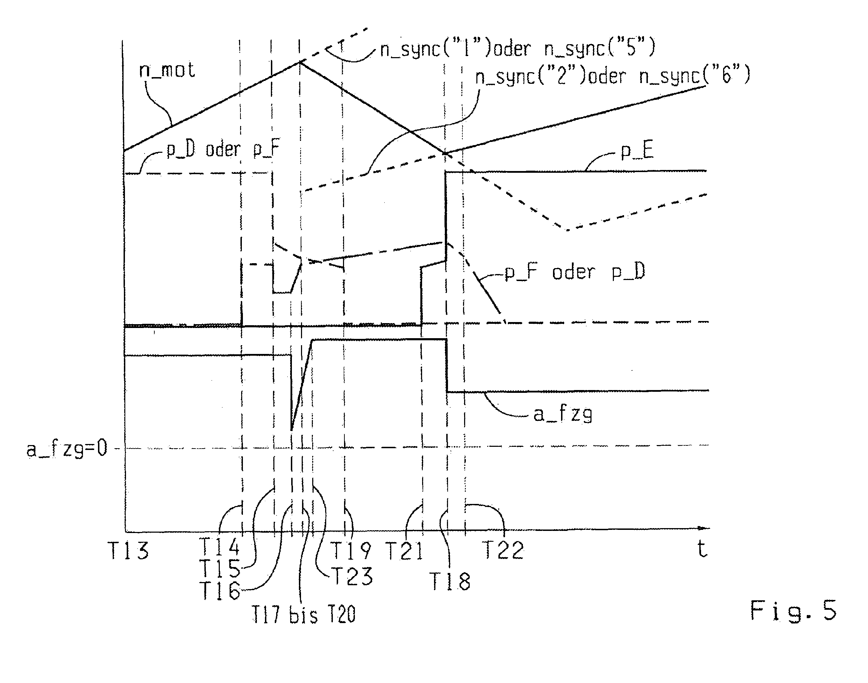

Nachfolgend wird anhand weiterer in Fig. 5 dargestellter Verläufe von Betriebszustandsparametern eine weitere Variante des erfindungsgemäßen Verfahrens beschrieben, welche während einer Zughochschaltung in einer gegenüber der Getriebevorrichtung 1 gemäß Fig. 1 konstruktiv abgewandelten Getriebevorrichtung 1 durchgeführt wird, wobei bei der zweiten in der Zeichnung nicht näher dargestellten Ausführung der Getriebevorrichtung 1 das Schaltelement E als formschlüssiges Schaltelement ausgeführt ist, das zur Darstellung der durch die Zughochschaltung angeforderten Ziel-Übersetzung in einen geschlossenen Betriebszustand zu führen ist.

Der nachfolgenden Beschreibung liegt somit eine Getriebevorrichtung 1 zugrunde, welche bis auf das Schaltelement E grundsätzlich den gleichen konstruktiven Aufbau wie die Getriebevorrichtung 1 gemäß Fig. 1 aufweist, bei der das Schaltelement E als reibschlüssiges Schaltelement ausgebildet ist. Die verschiedenen Übersetzungsstufen "1" bis "9" für Vorwärtsfahrt und die Übersetzung "R" für Rückwärtsfahrt werden bei der zweiten Ausführung der Getriebevorrichtung 1 mit dem vorzugsweise als Klaue ausgeführten Schaltelement E gemäß der in Fig. 2 dargestellten Schaltlogik in der Getriebevorrichtung 1 eingelegt.

Die in Fig. 5 gezeigten Verläufe der verschiedenen Betriebsparameter stellen sich während einer Zughochschaltung in der Getriebevorrichtung 1 ein, wenn das formschlüssige Schaltelement E zur Darstellung der angeforderten Ziel-Übersetzung in der Getriebevorrichtung 1 zugeschaltet wird.

Grundsätzlich ist das Schaltelement E zur Darstellung der zweiten Übersetzung "2", der sechsten Übersetzung "6" und der achten Übersetzung "8" in den Kraftfluss der Getriebevorrichtung 1 zuzuschalten und zur Darstellung der weiteren Übersetzungen "1 ", "3" bis "5", "7" und "9" für Vorwärtsfahrt in einen geöffneten Betriebszustand zu führen bzw. zu halten.

Des Weiteren stellen die in Fig. 5 dargestellten Verläufe rein qualitative Verläufe dar, die eine Zughochschaltung ausgehend von der Ist-Übersetzung "1" in die Ziel-Übersetzung "2" oder von der Ist-Übersetzung "5" in die Ziel-Übersetzung "6" charakterisieren.

Zu einem Zeitpunkt T13 ist in der Getriebevorrichtung 1 die erste Übersetzungsstufe "1" oder die fünfte Übersetzungsstufe "5" eingelegt. Zu einem zeitlich darauf folgenden weiteren Zeitpunkt T14 liegt eine Anforderung für eine Zughochschaltung in Richtung der Ziel-Übersetzung "2" oder "6" vor, wobei zur Darstellung der zweiten Übersetzung "2" das reibschlüssige Schaltelement D abzuschalten und das formschlüssigen Schaltelement E zuzuschalten ist, während die beiden formschlüssigen Schaltelemente B und C in geschlossenem Betriebszustand gehalten werden. Wird durch die Zughochschaltung als Ziel-Übersetzung die sechste Übersetzungsstufe "6" angefordert, ist das reibschlüssige Schaltelement F abzuschalten und das formschlüssige Schaltelement E in den Kraftfluss zuzuschalten, während das formschlüssige Schaltelement C und das reibschlüssige Schaltelement A in geschlossenem Betriebszustand gehalten werden.

Nachfolgend wird die weitere Variante des erfindungsgemäßen Verfahrens zunächst während der Durchführung der Zughochschaltung ausgehend von der ersten Übersetzungsstufe "1" in Richtung der angeforderten zweiten Übersetzung "2" näher beschrieben.

Zum Zeitpunkt T14, zu dem die Anforderung für die Zughochschaltung vorliegt, wird das reibschlüssige Schaltelement F, welches während der Darstellung der ersten Übersetzungsstufe "1" im Wesentlichen in seinem geöffneten Betriebszustand vorliegt, während eines sich bis zu einem Zeitpunkt T15 erstreckenden Schnellfüllpuls und während einer bis zu einem Zeitpunkt T16 andauernden sowie sich an den Schnellfüllpuls anschließenden Füllausgleichsphase in einen Betriebszustand überführt, von dem ausgehend ein Anheben des Betätigungsdruckes p_F einen Anstieg der Übertragungsfähigkeit bewirkt. Das zuzuschaltende formschlüssige Schaltelement E wird durch entsprechendes Anheben der Übertragungsfähigkeit des reibschlüssigen Schaltelementes F wenigstens annähernd in einen synchronen Betriebszustand überführt.

Hierfür wird der Betätigungsdruck p_F des reibschlüssigen Schaltelementes F nach dem Zeitpunkt T16 über eine bis zu einem weiteren Zeitpunkt T17 andauernde erste Druckrampe auf einen ersten Druckwert angehoben und während einer sich an die erste Druckrampe anschließenden zweiten Druckrampe, die eine geringere Steigung als die erste Druckrampe aufweist, bis zu einem Zeitpunkt T18 weiter erhöht.

Gleichzeitig wird der Betätigungsdruck p_D des abzuschaltenden reibschlüssigen Schaltelementes D zum Zeitpunkt T15 sprungartig abgesenkt, anschließend bis zu einem Zeitpunkt T19 geregelt weiter reduziert und anschließend zum Zeitpunkt T19 im Wesentlichen vollständig auf Null geführt.

Das Absenken der Übertragungsfähigkeit des reibschlüssigen Schaltelementes D und die gleichzeitige Steigerung der Übertragungsfähigkeit des reibschlüssigen Schaltelementes F führt dazu, dass eine Getriebeeingangsdrehzahl n_mot der Getriebevorrichtung 1 zu einem Zeitpunkt T20, der im Wesentlichen dem Zeitpunkt T17 entspricht, ausgehend von einer zu der Synchrondrehzahl n_sync("1") der Ist-Übersetzung "1" äquivalenten Drehzahl in Richtung einer zu einer Synchrondrehzahl n_sync("2") der Ziel-Übersetzung "2" äquivalenten Drehzahl geführt wird, wobei die Getriebeeingangsdrehzahl n_mot im Wesentlichen der Synchrondrehzahl n_sync("2") vorliegend zum Zeitpunkt T18 entspricht.

Zu einem Zeitpunkt T21, der auf den Zeitpunkt T19 folgt und vor dem Zeitpunkt T18 liegt, wird der Betätigungsdruck p_E des zuzuschaltenden formschlüssigen Schaltelementes E auf einen ersten Druckwert angehoben, womit das formschlüssige Schaltelement E im Wesentlichen für die Zuschaltung vorbereitet wird. Anschließend wird der Betätigungsdruck p_E des formschlüssigen Schaltelementes E bis zum Zeitpunkt T18 im Wesentlichen auf dem zum Zeitpunkt T21 eingestellten Druckniveau gehalten. Zum Zeitpunkt T18, zu dem die Getriebeeingangsdrehzahl n_mot im Wesentlichen der Synchrondrehzahl n_sync("2") der Ziel-Übersetzung "2" entspricht, wird der Betätigungsdruck p_E des formschlüssigen Schaltelementes E auf das Schließdruckniveau angehoben und das formschlüssige Schaltelement E geschlossen.

Das formschlüssige Schaltelement E befindet sich aufgrund der vorbeschriebenen Betätigung des reibschlüssigen Schaltelementes F zum Zeitpunkt T18 im Wesentlichen in seinem synchronen Betriebszustand und ist somit auf einfache Art und Weise aus seinem geöffneten Betriebszustand in seinen geschlossenen Betriebszustand überführbar. Der Betätigungsdruck p_F des reibschlüssigen Schaltelementes F wird nach dem Zeitpunkt T18 zunächst über eine bis zu einem Zeitpunkt T22 andauernde erste Druckrampe und eine sich daran anschließende zweite Druckrampe mit größerer Steigung im Wesentlichen auf Null abgesenkt, womit die angeforderte Zughochschaltung ausgehend von der ersten Übersetzungsstufe "1" in Richtung der zweiten Übersetzungsstufe "2" als beendet anzusehen ist.

Während der Durchführung der angeforderten Zughochschaltung stellt sich der in Fig. 5 gezeigte Verlauf der Fahrzeugbeschleunigung a_fzg ein, die zwischen den Zeitpunkten T13 bis T15 zunächst im Wesentlichen konstant ist. Zum Zeitpunkt T15 fällt die Fahrzeugbeschleunigung a_fzg sprungartig ab und steigt anschließend bis zu einem Zeitpunkt T23 wieder an.

Die Unstetigkeit im Verlauf der Fahrzeugbeschleunigung a_fzg resultiert aus der Tatsache, dass die Übertragungsfähigkeit des abzuschaltenden Schaltelementes D zum Zeitpunkt T15 bereits reduziert ist und die Übertragungsfähigkeit des zum Synchronisieren des zuzuschaltenden Schaltelementes E vorgesehenen reibschlüssigen Schaltelementes F das von einer Antriebsmaschine anliegende Drehmoment noch nicht im erforderlichen Umfang überträgt. Zum Zeitpunkt T23 ist die teilweise Lastübernahme im Bereich des Schaltelementes F vollzogen, womit die Fahrzeugbeschleunigung a_fzg bis zum Zeitpunkt T18 im Wesentlichen konstant bleibt. Zum Zeitpunkt T18, zu welchem das zuzuschaltende formschlüssige Schaltelement E geschlossen wird, sinkt die Fahrzeugbeschleunigung a_fzg auf das Niveau der Ziel-Übersetzung "2" ab und bleibt im Wesentlichen konstant.

Die zu Fig. 5 beschriebene weitere Variante des erfindungsgemäßen Verfahrens sieht bei einer angeforderten Zughochschaltung ausgehend von der fünften Übersetzung "5" in Richtung der sechsten Übersetzung "6" vor, dass das abzuschaltende reibschlüssige Schaltelement F in derselben Art und Weise wie das während einer Zughochschaltung ausgehend von der ersten Übersetzungsstufe "1" in die zweite Übersetzungsstufe "2" abzuschaltende reibschlüssige Schaltelement D betätigt wird. Gleichzeitig wird das reibschlüssige Schaltelement D, welches zum Synchronisieren des formschlüssigen Schaltelementes E während einer Zughochschaltung ausgehend von der fünften Übersetzungsstufe "5" in Richtung der sechsten Übersetzungsstufe "6" verwendet wird, im gleichen Umfang wie das zum Synchronisieren des formschlüssigen Schaltelementes E vorgesehene reibschlüssige Schaltelement F während einer Zughochschaltung ausgehend von der ersten Übersetzungsstufe "1" in die zweite Übersetzungsstufe "2" betätigt.

Aufgrund der zu Fig. 5 beschriebenen weiteren Variante des erfindungsgemäßen Verfahrens sind der mit dem formschlüssigen Schaltelement E ausgeführten Getriebevorrichtung 1 Zughochschaltungen zugkraftunterbrechungsfrei durchführbar und gleichzeitig Verlustleistungen aufgrund von Schleppmomenten weiter reduziert.

Zughochschaltungen, während weichen zumindest ein formschlüssiges Schaltelement zuzuschalten ist, werden gemäß einer Variante des erfindungsgemäßen Verfahrens als Doppelhochschaltung bzw. als Mehrfachhochschaltung begonnen. Sobald die Getriebeeingangsdrehzahl jeweils die zur Synchrondrehzahl n_sync("2") bzw. n_sync("6") äquivalente Drehzahl erreicht, liegt das zu schließende formschlüssige Schaltelement E im Wesentlichen in synchronem Betriebszustand vor und ist dann einfach und zu einem definierten Zeitpunkt in seinen geschlossenen Betriebszustand überführbar. Die Übertragungsfähigkeit des die Synchronisierung des formschlüssigen Schaltelementes E bzw. die zugkraftunterbrechungsfreie Synchronisierung des formschlüssigen Schaltelementes E jeweils gewährleistenden reibschlüssigen Schaltelementes F oder D wird nach dem Zuschalten des formschlüssigen Schaltelementes E im Wesentlichen wieder auf Null oder auf einen niedrigen Wert abgesenkt.

Da im Bereich der für die Synchronisierung des formschlüssigen Schaltelementes E jeweils vorgesehenen Schaltelemente D und F unter Umständen hohe Reibleistungen auftreten können, sind diese beispielsweise über eine strategiefähige Kühlung und/oder eine entsprechende Getriebeschmierung versorgbar und/oder mit Hochleistungsreibbelägen ausführbar.

Bei der Variante erfindungsgemäßen Vorgehensweise sind formschlüssige Schaltelemente jeweils nur zur Darstellung bis zum n-1ten Gang einer Getriebevorrichtung mit n-Gangstufen einsetzbar, da jeweils immer ein zur Darstellung des nächst höheren Ganges zuzuschaltendes reibschlüssiges Schaltelement für die Drehzahlangleichung bzw. die Synchronisierung des zuzuschaltenden formschlüssigen Schaltelementes herangezogen wird, um eine zugkraftunterbrechungsfreie Zughochschaltung durchführen zu können.

Die erfindungsgemäße Vorgehensweise führt unter Umständen selbst bei einem Verzicht auf den höchstmöglichen Fahrgang bzw. dem Overdrive zu einer Reduzierung eines Kraftstoffverbrauches eines Fahrzeuges, wenn die Reduzierung des Kraftstoffverbrauches alleine aufgrund der Reduzierung der Schleppmomente im Bereich der Schaltelementes höher ist als während eines Betriebes im zusätzlichen Overdrive.

### Bezugszeichen

- 1: Getriebevorrichtung
- 2: Antriebswelle
- 3: Abtriebswelle
- "1" bis "9": Übersetzung für Vorwärtsfahrt
- A bis F: Schaltelement
- a_fzg: Fahrzeugbeschleunigung
- "N": Neutralbetriebszustand
- n_mot: Getriebeeingangsdrehzahl
- n_sync: Synchrondrehzahl
- nd_C: Differenzdrehzahl des Schaltelementes C
- p_A: Betätigungsdruck
- p_A1: Druckniveau
- p_B: Betätigungsdruck
- p_C: Betätigungsdruck
- p_D: Betätigungsdruck
- p_E: Betätigungsdruck
- p_F: Betätigungsdruck
- P1 bis P4: Planetenradsatz
- "R": Übersetzung für Rückwärtsfahrt
- T1 bis T23: diskreter Zeitpunkt
- t: Zeit

## Patentansprüche

1. Verfahren zum Betreiben einer Getriebevorrichtung (1) mit mehreren reibschlüssigen Schaltelementen (A, D, E, F) und wenigstens einem formschlüssigen Schaltelement (B, C) zum Darstellen verschiedener Übersetzungen ("1" bis "9", "R"), wobei das formschlüssige Schaltelement (C) bei einer angeforderten Schaltung, während der das formschlüssige Schaltelement (C) aus einem geöffneten in einen geschlossenen Betriebszustand überführt wird, durch Anheben der Übertragungsfähigkeit wenigstens eines reibschlüssigen Schaltelementes (A), welches weder zur Darstellung des aktuellen Betriebszustands der Getriebevorrichtung (1) noch zur Darstellung der einzulegenden Übersetzung ("1") in den Kraftfluss der Getriebevorrichtung (1) zuzuschalten ist, wenigstens annähernd synchronisiert und in wenigstens annähernd synchronisiertem Betriebszustand in seinen geschlossenen Betriebszustand überführt wird, **dadurch gekennzeichnet, dass** anschließend an das Überführen des formschlüssigen Schaltelements (C) in seinen geschlossenen Betriebszustand ein den Kraftschluss in der Getriebevorrichtung (1) herstellendes weiteres reibschlüssiges Schaltelement (D) durch entsprechendes Anheben eines Betätigungsdruckes des reibschlüssigen Schaltelementes (D) in den Kraftfluss der Getriebevorrichtung (1) zugeschaltet bzw. in seinen geschlossenen Betriebszustand überführt wird, wobei zur Darstellung einer Übersetzung in der Getriebevorrichtung (1) bzw. zum Herstellen eines Kraftflusses in der Getriebevorrichtung (1) jeweils gleichzeitig drei Schaltelemente in einen geschlossenen Betriebszustand zu führen bzw. zu halten sind.

2. Verfahren nach Anspruch 1, **dadurch gekennzeichnet, dass** das Schaltelement (D) bereits vor einem Zuschaltzeitpunkt (T6) des formschlüssigen Schaltelementes (C) für seine Zuschaltung durch entsprechende Druckführung seines Betätigungsdruckes vorbereitet wird.

3. Verfahren nach Anspruch 1 oder 2, **dadurch gekennzeichnet, dass** die Übertragungsfähigkeit wenigstens eines weiteren reibschlüssigen Schaltelementes (E), welches weder an dem Synchronisiervorgang des formschlüssigen Schaltelementes (C) noch zur Darstellung des aktuellen Betriebszustandes der Getriebevorrichtung (1) oder zur Darstellung der einzulegenden Übersetzung ("1") beteiligt ist, vor dem durch das Anheben der Übertragungsfähigkeit des reibschlüssigen Schaltelementes (A) bewirkten Synchronisieren des formschlüssigen Schaltelementes (C) angehoben und ein mit einem Getriebeausgang (3) wirkverbundener Abtrieb eines mit der Getriebevorrichtung (1) ausgebildeten Fahrzeuges abgebremst wird.

4. Verfahren nach Anspruch 3, **dadurch gekennzeichnet, dass** bei einer Rückwärtsfahrt eines mit der Getriebevorrichtung (1) ausgeführten Fahrzeuges mit einer Fahrzeuggeschwindigkeit größer als ein vordefinierter Schwellwert, einem Neutralbetriebszustand (N) der Getriebevorrichtung, zu dem der Kraftfluss in der Getriebevorrichtung (1) im Wesentlichen unterbrochen ist, und bei Vorliegen einer Anforderung zum Einlegen einer Übersetzung ("1") für Vorwärtsfahrt in der Getriebevorrichtung (1), zu deren Darstellung das formschlüssige Schaltelement (C) in einen geschlossenen Betriebeszustand zu überführen ist, der mit dem Abtrieb wirkverbundene Getriebeausgang (3) durch Anheben der Übertragungsfähigkeit des weiteren reibschlüssigen Schaltelementes (E) abgebremst wird.

5. Verfahren nach einem der Ansprüche 1 bis 4, **dadurch gekennzeichnet, dass** bei einer Vorwärtsfahrt eines mit der Getriebevorrichtung (1) ausgeführten Fahrzeuges und einer Fahrzeuggeschwindigkeit kleiner als ein vordefinierter Schwellwert, einem Neutralbetriebszustand (N) der Getriebevorrichtung (1), zu dem der Kraftfluss in der Getriebevorrichtung im Wesentlichen unterbrochen ist und bei Vorliegen einer Anforderung zum Einlegen einer Übersetzung ("1") für Vorwärtsfahrt in der Getriebevorrichtung (1), zu deren Darstellung das formschlüssige Schaltelement (C) in einen geschlossenen Betriebszustand zu überführen ist, das formschlüssige Schaltelement (C) durch Anheben der Übertragungsfähigkeit eines reibschlüssigen Schaltelementes (A), dessen Übertragungsfähigkeit während der Darstellung der angeforderten Übersetzung ("1") im Wesentlichen Null ist, wenigstens annähernd synchronisiert und anschließend geschlossen wird, wobei daran anschließend ein den Kraftfluss in der Getriebevorrichtung (1) herstellendes reibschlüssiges Schaltelement (D) zugeschaltet wird.

6. Verfahren nach Anspruch 5, **dadurch gekennzeichnet, dass** bei einer Rückwärtsfahrt mit einer Fahrzeuggeschwindigkeit kleiner als der Schwellwert das formschlüssige Schaltelement (C) durch Anheben der Übertragungsfähigkeit des reibschlüssigen Schaltelementes (A) wenigstens annähernd synchronisiert und anschließend geschlossen wird und wiederum daran anschließend das den Kraftfluss in der Getriebevorrichtung (1) herstellende reibschlüssige Schaltelement (D) zugeschaltet wird.

7. Verfahren nach einem der Ansprüche 1 bis 6, **dadurch gekennzeichnet, dass** das formschlüssige Schaltelement (E) bei Vorliegen einer Anforderung für eine Zughochschaltung zur Darstellung der angeforderten ZielÜbersetzung ("2" oder "6") zuzuschalten ist und vor der Zuschaltung durch Anheben der Übertragungsfähigkeit wenigstens eines reibschlüssigen Schaltelementes (D oder F), welches weder zur Darstellung des aktuellen Betriebszustands der Getriebevorrichtung (1) noch zur Darstellung des angeforderten Betriebszustandes in den Kraftfluss der Getriebevorrichtung (1) zuzuschalten ist, wenigstens annähernd synchronisiert wird.

8. Verfahren nach Anspruch 7, **dadurch gekennzeichnet, dass** die Übertragungsfähigkeit des zur Darstellung der Ist-Übersetzung ("1" oder "5") zugeschalteten reibschlüssigen Schaltelementes (D oder F) bei Vorliegen einer Getriebeeingangsdrehzahl (n_mot), die wenigstens annähernd einer zu der angeforderten Ziel-Übersetzung ("2" oder "6") äquivalenten Synchrondrehzahl (n_sync("2") oder n_sync("6")) entspricht, abgesenkt wird, während das zuzuschaltende formschlüssige Schaltelement (E) in einen geschlossenen Betriebszustand überführt wird.

9. Verfahren nach Anspruch 7 oder 8, **dadurch gekennzeichnet, dass** die Übertragungsfählgkeit eines zur Darstellung der Ist-Übersetzung ("1" oder "5") in den Kraftfluss zugeschalteten reibschlüssigen Schaltelementes (D oder F) bei Vorliegen der Anforderung für die Zughochschaltung ausgehend von der Ist-Übersetzung ("1" oder "5") in Richtung der Ziel-Übersetzung ("2" oder "6") reduziert wird, wenn das zum Synchronisieren des zuzuschaltenden formschlüssigen Schaltelementes (E) vorgesehene reibschlüssige Schaltelement (F oder D) für die Erhöhung der Übertragungsfähigkeit wenigstens annähernd vorbereitet ist.

10. Verfahren nach einem der Ansprüche 7 bis 9, **dadurch gekennzeichnet, dass** die Übertragungsfähigkeit des zur Darstellung der Ist-Übersetzung ("1" oder "5") zugeschalteten reibschlüssigen Schaltelementes (D oder F) wenigstens annähernd auf null abgesenkt wird, wenn die Getriebeeingangsdrehzahl (n_mot) von der zur Ist-Übersetzung ("1" oder "5") äquivalenten Drehzahl (n_sync("1") oder n_sync("5")) aufgrund der Übertragungsfähigkeit des zum Synchronisieren des zuzuschaltenden formschlüssigen Schaltelementes (E) vorgesehenen reibschlüssigen Schaltelementes (F oder D) in Richtung der zur Ziel-Übersetzung ("2" oder "6") äquivalenten Drehzahl (n_sync("2") oder n_sync("e")) geführt wird.

## Claims

1. Method for operating a transmission device (1), having a plurality of frictionally locking shift elements (A, D, E, F) and at least one positively locking shift element (B, C) for bringing about different transmission ratios ("1" to "9", "R"), wherein in the event of a requested shift operation during which the positively locking shift element (C) is at least approximately synchronized and transferred into its closed operating state in at least an approximately synchronized operating state by raising the transmission capability of at least one frictionally locking shift element (A) which does not have to be connected into the force flux of the transmission device (1) either to bring about the current operating state of the transmission device (1) or to bring about the transmission ratio ("1") which is to be engaged, the positively locking shift element (C) is transferred from an opened operating state into a closed operating state, **characterized in that** subsequent to the transfer of the positively locking shift element (C) into its closed operating state a further frictionally locking shift element (D), which is to bring about the frictional engagement in the transmission device (1), is connected into the force flux of the transmission device (1) by correspondingly raising an activation pressure of the frictionally locking shift element (D), or is transferred into its closed operating state, wherein in order to form a transmission ratio in the transmission device (1) or in order to bring about a force flux in the transmission device (1) in each case three shift elements are to be placed or held in a closed operating state simultaneously.

2. Method according to Claim 1, **characterized in that** the shift element (D) is already prepared for its connection by corresponding pressure regulation of its activation pressure even before a connection time (T6) of the positively locking shift element (C).

3. Method according to Claim 1 or 2, **characterized in that** the transmission capability of at least one further frictionally locking shift element (E) which is not involved in the synchronization procedure of the positively locking shift element (C) either in bringing about the current operating state of the transmission device (1) or bringing about the transmission ratio ("1") to be engaged is raised before the synchronization of the positively locking shift element (C) which is brought about by raising the transmission capability of the frictionally locking shift element (A), and an output, which is operatively connected to a transmission output (3) of a vehicle which is embodied with the transmission device (1) is braked.

4. Method according to Claim 3, **characterized in that** in the case of reverse travel of a vehicle which is embodied with the transmission device (1), with a vehicle speed which is higher than a predefined threshold value, in the case of a neutral operating state (N) of the transmission device, in which state the force flux in the transmission device (1) is essentially interrupted, and when a request to engage a transmission ratio ("1") for forward travel in the transmission device (1) is present, to bring about which transmission ratio ("1") the positively locking shift element (C) is to be transferred into a closed operating state, the transmission output (3) which is operatively connected to the output is braked by raising the transmission capability of the further frictionally locking shift element (E).

5. Method according to one of Claims 1 to 4, **characterized in that** in the case of forward travel of a vehicle which is embodied with the transmission device (1), and in the case of a vehicle speed which is lower than a predefined threshold value, and in the case of a neutral operating state (N) of the transmission device (1) in which state the force flux in the transmission device is essentially interrupted, and when a request to engage a transmission ratio ("1") for forward travel in the transmission device (1) is present, to bring about which transmission ratio ("1") the positively locking shift element (C) has to be transferred into a closed operating state, the positively locking shift element (C) is at least approximately synchronized and subsequently closed by raising the transmission capability of a frictionally locking shift element (A), the transmission capability of which is essentially zero while the requested transmission ratio ("1") is being brought about, wherein subsequent to this a frictionally locking shift element (D) which brings about the force flux in the transmission device (1) is connected.

6. Method according to Claim 5, **characterized in that** in the case of reverse travel with a vehicle speed which is less than the threshold value the positively locking shift element (C) is at least approximately synchronized and subsequently closed by raising the transmission capability of the frictionally locking shift element (A), and subsequently to this the frictionally locking shift element (D) which brings about the force flux in the transmission device (1) is in turn connected.

7. Method according to one of Claims 1 to 6, **characterized in that** when a request for a traction upshift in order to bring about the requested target transmission ratio ("2" or "6") is present, the positively locking shift element (E) is to be connected, and before the connection is at least approximately synchronized by raising the transmission capability of at least one frictionally locking shift element (D or F) which does not have to be connected into the force flux of the transmission device (1) either to bring about the current operating state of the transmission device (1) or to bring about the requested operating state.

8. Method according to Claim 7, **characterized in that** when a transmission input rotational speed (n_mot) which corresponds at least approximately to a synchronous rotational speed (n_sync("2") or n_sync ("6")) which is equivalent to the requested target transmission ratio ("2" or "6") is present, the transmission capability of the frictionally locking shift element (D or F) which is connected in order to bring about the actual transmission ratio ("1" or "5") is reduced, while the positively locking shift element (E) which is to be connected is transferred into a closed operating state.

9. Method according to Claim 7 or 8, **characterized in that** when a request for the traction upshift starting from the actual transmission ratio ("1" or "5") in the direction of the target transmission ratio ("2" or "6") is present, the transmission capability of a frictionally locking shift element (D or F) which is connected into the force flux in order to bring about the actual transmission ratio ("1" or "5") is reduced if the frictionally locking shift element (F or D) which is provided for the synchronization of the positively locking shift element (E) which is to be connected is at least approximately prepared for the increasing of the transmission capability.

10. Method according to one of Claims 7 to 9, **characterized in that** the transmission capability of the frictionally locking shift element (D or F) which is connected in order to bring about the actual transmission ratio ("1" or "5") is lowered at least approximately to zero if the transmission input rotational speed (n_mot) is regulated in the direction of the rotational speed (n_sync ("2") or n_sync ("6")), which is equivalent to the target transmission ratio ("2" or "6"), from the rotational speed (n_sync("1") or n_sync ("5")), which is equivalent to the actual transmission ratio ("1" or "5"), on the basis of the transmission capability of the frictionally locking shift element (F or D) which is provided for the synchronization of the positively locking shift element (E) which is to be connected.

## Revendications

1. Procédé pour faire fonctionner un dispositif de transmission (1) avec plusieurs éléments de changement de vitesse (A, D, E, F) réalisés par complémentarité de frottements et au moins un élément de changement de vitesse (B, C) réalisé par complémentarité de formes pour représenter différents rapports de multiplication (« 1 » à « 9 », « R »), l'élément de changement de vitesse (C) réalisé par complémentarité de formes étant transféré d'un état de fonctionnement ouvert dans un état de fonctionnement fermé en cas de demande de changement de vitesse tandis que l'élément de changement de vitesse (C) réalisé par complémentarité de formes ne doit être connecté par relèvement de la capacité de transmission d'au moins un élément de changement de vitesse (A) réalisé par complémentarité de frottements ni pour la représentation de l'état de fonctionnement actuel du dispositif de transmission (1) ni pour la représentation du rapport de multiplication (« 1 ») à passer dans le flux de forces du dispositif de transmission (1), qu'il est au moins approximativement synchronisée et passé, dans l'état de fonctionnement au moins approximativement synchronisé, dans son état de fonctionnement fermé, **caractérisé en ce qu'**ensuite, un élément de changement de vitesse (D) réalisé par complémentarité de frottements supplémentaire et établissant la complémentarité de forces dans le dispositif de transmission (1) est connecté dans le flux de forces du dispositif au niveau du transfert de l'élément de changement de vitesse (C) réalisé par complémentarité de formes dans son état de fonctionnement fermé, par relèvement correspondant d'une pression d'actionnement de l'élément de changement de vitesse (D) réalisé par complémentarité de frottements de transmission (1) et/ou est transféré dans son état de fonctionnement fermé, trois éléments de changement de vitesse devant être amenés et/ou maintenus respectivement simultanément dans un état de fonctionnement fermé pour la représentation d'un rapport de multiplication dans le dispositif de transmission (1) et/ou pour la mise en place d'un flux de forces dans le dispositif de transmission (1).

2. Procédé selon la revendication 1, **caractérisé en ce que** l'élément de changement de vitesse (D) est déjà préparé avant un moment de changement de vitesse (T6) de l'élément de changement de vitesse (C) réalisé par complémentarité de formes pour sa connexion par guidage de pression correspondant de sa pression d'actionnement.

3. Procédé selon la revendication 1 ou 2, **caractérisé en ce que** la capacité de transmission d'au moins un élément de changement de vitesse (E) supplémentaire réalisé par complémentarité de frottements n'est intégrée ni lors du processus de synchronisation de l'élément de changement de vitesse (C) réalisé par complémentarité de formes ni pour la représentation de l'état de fonctionnement actuel du dispositif de transmission (1) ou pour la représentation du rapport de multiplication (« 1 ») à passer, avant la synchronisation, provoquée par le relèvement de la capacité de transmission de l'élément de changement de vitesse (A) réalisé par complémentarité de frottements, de l'élément de changement de vitesse (C) réalisé par complémentarité de formes et qu'un entraînement en sortie, activement relié à une sortie de transmission (3), d'un véhicule réalisé avec le dispositif de transmission (1) est freiné.

4. Procédé selon la revendication 3, **caractérisé en ce qu'**en cas de conduite en marche arrière d'un véhicule doté du dispositif de transmission (1) à une vitesse de véhicule supérieure à une valeur seuil prédéfinie, en cas d'état de fonctionnement neutre (N) du dispositif de transmission auquel le flux de forces est pour l'essentiel interrompu dans le dispositif de transmission (1) et en présence d'une demande de passage d'un rapport de multiplication (« 1 ») pour la conduite en marche avant dans le dispositif de transmission (1), l'élément de changement de vitesse (C) réalisé par complémentarité de formes doit être transféré dans un état de fonctionnement fermé pour sa représentation, la sortie de transmission (3) activement reliée à l'entraînement en sortie est freinée par relèvement de la capacité de transmission d'un élément de changement de vitesse (E) par complémentarité de frottements supplémentaire.

5. Procédé selon l'une quelconque des revendications 1 à 4, **caractérisé en ce qu'**en cas de conduite en marche avant d'un véhicule doté du dispositif de transmission (1) et de vitesse de véhicule inférieure à une valeur seuil prédéfinie, d'état de fonctionnement neutre (N) du dispositif de transmission (1) auquel le flux de forces est pour l'essentiel interrompu dans le dispositif de transmission et en présence d'une demande de passage d'un rapport de multiplication (« 1 ») dans le dispositif de transmission (1) pour la conduite en marche avant, l'élément de changement de vitesse (C) réalisé par complémentarité de formes doit être transféré dans un état de fonctionnement fermé pour sa représentation, l'élément de changement de vitesse (C) réalisé par complémentarité de formes est au moins approximativement synchronisé puis fermé par relèvement de la capacité de transmission d'un élément de changement de vitesse (A) réalisé par complémentarité de frottements dont la capacité de transmission est pour l'essentiel égale à zéro pendant la représentation du rapport de multiplication (« 1 ») demandé, un élément de changement de vitesse (D) réalisé par complémentarité de frottements établissant le flux de forces dans le dispositif de transmission (1) y étant ensuite connecté.

6. Procédé selon la revendication 5, **caractérisé en ce qu'**en cas de conduite en marche arrière à une vitesse du véhicule inférieure à la valeur seuil, l'élément de changement de vitesse (C) réalisé par complémentarité de formes est au moins approximativement synchronisé puis fermé par relèvement de la capacité de transmission de l'élément de changement de vitesse (A) réalisé par complémentarité de frottements et que l'élément de changement de vitesse (D) réalisé par complémentarité de frottements établissant le flux de forces dans le dispositif de transmission (1) y est ensuite à son tour connecté.

7. Procédé selon l'une quelconque des revendications 1 à 6, **caractérisé en ce que** l'élément de changement de vitesse (E) réalisé par complémentarité de formes doit être connecté en présence d'une demande de changement de vitesse vers une vitesse supérieure pour la représentation du rapport de multiplication cible (« 2 » ou « 6 ») demandé et qu'il est au moins approximativement synchronisé avant la connexion par relèvement de la capacité de transmission d'au moins un élément de changement de vitesse (D ou F) réalisé par complémentarité de frottements ne devant être connecté dans le flux de forces du dispositif de transmission (1) ni pour la représentation de l'état de fonctionnement actuel du dispositif de transmission (1) ni pour la représentation de l'état de fonctionnement demandé.

8. Procédé selon la revendication 7, **caractérisé en ce que** la capacité de transmission de l'élément de changement de vitesse (D ou F) réalisé par complémentarité de frottements connecté pour la représentation du rapport de multiplication réel (« 1 » ou « 5 ») est abaissée en présence d'une vitesse de rotation d'entrée de transmission (n mot) correspondant au moins approximativement à une vitesse de rotation synchrone (n_sync(« 2 ») ou n_sync(« 6 »)) équivalente au rapport de multiplication cible (« 2 » ou « 6 ») demandé, tandis que l'élément de changement de vitesse (E) réalisé par complémentarité de formes à connecter est transféré dans un état de fonctionnement fermé.

9. Procédé selon la revendication 7 ou 8, **caractérisé en ce que** la capacité de transmission d'un élément de changement de vitesse (D ou F) réalisé par complémentarité de frottements connecté dans le flux de forces pour la représentation du rapport de multiplication réel (« 1 » ou « 5 ») est réduit en présence de la demande de changement de vitesse vers une vitesse supérieure, à partir du rapport de multiplication réel (« 1 » ou « 5 ») en direction du rapport de multiplication cible (« 2 » ou « 6 ») lorsque l'élément de changement de vitesse (F ou D) réalisé par complémentarité de frottements prévu pour synchroniser l'élément de changement de vitesse (E) réalisé par complémentarité de formes à connecter est préparé au moins approximativement pour synchroniser l'élément de changement de vitesse (E) réalisé par complémentarité de formes.

10. Procédé selon l'une quelconque des revendications 7 à 9, **caractérisé en ce que** la capacité de transmission de l'élément de changement de vitesse (D ou F) réalisé par complémentarité de frottements connecté pour la représentation du rapport de multiplication réel (« 1 » ou « 5 ») est abaissée au moins approximativement à zéro lorsque la vitesse de rotation d'entrée de transmission (n_mot) est passée de la vitesse de rotation (n_sync(« 1 ») ou n_sync(« 5 »)) équivalente au rapport de multiplication réel (« 1 » ou « 5 ») sur la base de la capacité de transmission de l'élément de changement de vitesse (F ou D) réalisé par complémentarité de frottements prévu pour synchroniser l'élément de changement de vitesse (E) réalisé par complémentarité de formes à connecter, en direction de la vitesse de rotation (n_sync(« 2 ») ou n_sync(« 6 »)) équivalente au rapport de multiplication cible (« 2 » ou « 6 ».
